(19)

Europäisches Patentamt
European Patent Office
Office européen des brevets

(11) **EP 2 921 917 A1**

(12) **EUROPEAN PATENT APPLICATION**
published in accordance with Art. 153(4) EPC

(43) Date of publication:
**23.09.2015 Bulletin 2015/39**

(21) Application number: **12888226.3**

(22) Date of filing: **20.11.2012**

(51) Int Cl.:
*G05B 17/00* (2006.01)  *G06F 11/00* (2006.01)

(86) International application number:
**PCT/RU2012/000958**

(87) International publication number:
**WO 2014/077724 (22.05.2014 Gazette 2014/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2012 RU 2012149034**

(71) Applicants:
• **Federal State Institution "Federal Agency for Legal Protection of Military, Special and Dual Use Intellectual Activity Results"**
**Moscow 123995 (RU)**
• **Joint-Stock Company "Scientific-Research Institute of Aircraft Equipment" (JSC "SRIAE")**
**Zhukovsky 140185 (RU)**

(72) Inventors:
• **BUKOV, Valentin Nikolaevich**
**Moscow 127253 (RU)**
• **AVERYANOV, Igor Nikolaevich**
**Moskovskaya oblast**
**Zhukovsky 140180 (RU)**
• **BRONNIKOV, Andrei Mikhailovich**
**Moscow 111539 (RU)**
• **KUSHNIR, Andrei Leontyevich**
**Moskovskaya oblast**
**Zhukovsky 140184 (RU)**
• **SELVESYUK, Nikolai Ivanovich**
**Moscow 127322 (RU)**

(74) Representative: **Michalski Hüttermann & Partner Patentanwälte mbB**
**Speditionstraße 21**
**40221 Düsseldorf (DE)**

(54) **METHOD FOR LOCATING MULTIPLE UNCONTROLLED FAILURES OF TECHNICAL SYSTEMS**

(57) The proposed method and device enable to improve efficiency, depth and reliability of diagnosing technical condition of highly complex objects. The said technical effect is achieved due to the fact that, according to the method, signals are received from a diagnosed object (DO), these signals are transformed into a technical condition initial estimate vector for the DO elements. Then, technical condition estimates for the OD elements are specified through a cyclical process and by using a reverse logical model and a direct logical model. A technical condition vector estimate is formed after the cyclical process is completed, and its variable components are used for deciding on technical condition of the diagnosed object elements. The device comprises an interface unit which inputs serve for connecting to the DO data outputs, a measuring unit, an initial estimate forming unit, a switching unit, a reverse triplex logical model and a direct triplex logical model, a result interpretation unit and a control unit.

Fig. 4

**Description**

Field of the Invention

The invention relates to the field of computer engineering and control equipment and may be used in functional diagnostics systems providing for failure localizing (tracing failure points) in technical systems on the basis of information concerning external manifestation of such failures.

Prior Art

Functional diagnostics is understood as a process of determining a failure and tracing a failure point at the background of engineering system ordinary signals, i.e. where a system is used according to its purpose and receives operational (rather than testing) impacts [Machine-Building. Encyclopedia. V. III-7. Measurements, Control, Diagnostics (in Russian) / Ed. by V.V. Klyuev. - M.: Machinostroenie. 1996, p.404], [Fundamentals of Technical Diagnostics. Book 1. Models of Objects, Diagnostic Methods and Algorithms (in Russian) / Ed. by P.P. Parkhomenko. - M.: Energia. 1976, p.13].
Diagnosis of engineering systems includes at least two tasks:

- checking an object for correct functioning;
- localizing, i.e., tracing points and possible reasons for failures causing operation failures or incorrect functioning of an object.

This invention provides a method and a device for solving the second task, namely, localizing.
Uncontrollable failures are understood in the invention as failures in sub-systems, individual units, modules or elements of an engineering system (hereinafter referred to as "diagnosis object"), wherein said failures may not be detected by control systems themselves (including built-in test means). From the point of the modern system theory, such failures may relate both to observable, i.e., having a potential possibility of being detected, and to non-observable, i.e., having no such a potential possibility. In the first case, the method and the device, as proposed herein, indicate a failure point, and in the second case form a solution on insufficiency of information available for finding a solution to the localizing task.
An uncontrollable failure occurring in a system may lead to its operation failure or to its incorrect functioning in all or individual modes, but may not lead to any manifestations (e.g., in a case of redundancy of a failed element). Thus, the task of localizing for uncontrollable failures is understood as tracing points and possible reasons for failures according to their observable manifestations.
At present, most methods for localizing failures in engineering objects are based on the use of logical or Boolean models as diagnosis models [Machine-Building. Encyclopedia. V. III-7. Measurements, Control, Diagnostics (in Russian) / Ed. by V.V. Klyuev. - M.: Machinostroenie. 1996], [Fundamentals of Technical Diagnostics. Book 1. Models of Objects, Diagnostic Methods and Algorithms (in Russian) / Ed. by P.P. Parkhomenko. - M.: Energia. 1976], [L.P. Kolodezhny, A.V. Chernodarov. Reliability and Engineering Diagnostics: Textbook for students of air-force higher education institutions. - M.: Publishing House at the Air-Force Academy Named after Prof. N.E. Zhukovsky and Yu.A. Gagarin, 2010].
Logical methods of detection include methods relating to those of the graph theory.
The closest to the claimed device and a method of its functioning is a functional diagnostic device (DD), [Fundamentals of Technical Diagnostics. Book 1. Models of Objects, Diagnostic Methods and Algorithms (in Russian) / Ed. by P.P. Parkhomenko. - M.: Energia. 1976, p.38].
A diagnosed object (hereinafter "DO") is an interrelated set of parts (systems, sub-systems, units, apparatuses, modules, elements) hereinafter referred to in general as "elements". For carrying out diagnosis, a failure localizing task is set, i.e. the task of detecting a failed element. A DO functions under influence of input signals coming thereto and forms output signals that may be or may be not available for direct measurements. An diagnosed object is linked to the diagnostic apparatus (DD) via an interface unit (IU).
The technical condition of an DO is expressed by the vector $X$ called the DO technical condition vector comprising $n$ components in the form of variables $x_j$ corresponding to the technical condition of the DO elements; here, $j$ is a sequence number of an elements from the plurality of the DO $n$ elements. The number $n$ is called the $X$-vector length. The principal peculiarity of DO directly uncontrollable failures is unavailability of its technical condition vector $X$ for direct measurement. Therefore, a DD uses a specially formed estimation $\hat{X}$ of this vector for diagnosing this vector. The task of failure localizing is execution of the following equality

$$\hat{X} = X. \qquad\qquad (1)$$

The interface unit (IU) under the action of the control unit (CU) generates links of the measuring unit (MU) with the DO directly monitored parameters DO containing both explicit information $Q$ on the DO operation mode, and implicit information Z on the technical condition of its elements. Information on the DO operation mode is transferred to the DD for performing corresponding settings of its units. The DO input and output signals may be or may be not directly included into the parameters of $Q$ and Z. And it is not necessary that all the DO elements are available for direct control by the MU. The measuring unit MU is a device of functional control and, on the basis of methods provided therein (e.g., methods for monitoring tolerances) determines operability or non-operability of some (principally not all) DO elements of their combinations. The vector $Y$ of failure manifestations is formed at the MU output. In addition, the IU generates estimation $\hat{X}$ of the technical condition vector X. The DD comprises a formalized model (FM) of an diagnosed object (DO), which forms, according to estimation $\hat{X}$ of the technical condition vector, estimation $\hat{Y}$ of the failure manifestation vector. When estimation $\hat{X}$ is set correctly, i.e., on the condition (1), which is the failure localizing task, vectors of measured and calculated failure manifestations for the DO should coincide:

$$Y = \hat{Y}. \qquad\qquad (2)$$

This is controlled by the result interpretation unit (RIU) that, while the above identity is performed, forms diagnosis results. Otherwise, the RIU transmits to the CU an instruction to correct estimation $\hat{X}$ by acting on the IU. If failures are found, the RIU also issues instructions to reconfigure the DO. This represents communication between the RIU and the DO.

In order to trace a failure point, DDs of state of the art use a direct logical model (DLM) that described dependence of failure manifestations (failure influence propagation and observed deviations from the normal functioning) on a point and nature of failures in a system. In this case the diagnostic device comprises: a control unit CU, a measuring unit MU, a direct logical model DLM, a result interpretation unit RIU.

In addition, a reverse logical model (RLM) is used that described dependence of possible failures (their points in a system and nature) on failure manifestations. If an RLM is used, a calculation volume is reduced significantly. If an RLM is used, the DD comprises: a control unit CU, an interface unit IU, a measuring unit MU, a result interpretation unit RIU and an RLM. Usually, a DLM and a RLM are used in different functional schemes separately.

In order to describe operation of logical models and other units formally, logical operators AND, OR, NOT are used.

The known methods and devices have significant constraints:

1) Use of a DD based on a DLM for localizing of failures leads to a great volume of computational burden, while use of a diagnostic device based on the RLM does not enable to formulate a correct solution due to ambiguity of obtained results.

2) Frequently, for simplifying a DD implementation, assumption concerning low possibility of simultaneous failure of two or more elements is introduced. In this case a number of searches in a DD based on a DLM is reduced to $n$ (where $n$ is a length of vector X, i.e., an DO element number which technical condition is to be determined). The same assumption may be used in a case where a DD is built on the basis of an reverse logical model. However, in this case a DD may determine failed elements incorrectly, if two or more failures occur simultaneously.

At the same time, experiences show that multiple failures in engineering systems are not rare, and, due to impossibility to efficiently repair some or other failure in practice, it is frequently the cause that an engineering system accumulates both similar and dissimilar failures.

3) A common drawback of the existing methods of diagnosis relates to the limited nature of the Boolean algebra used therein that makes, in each computational tact, to refer considered elements of an diagnosed object (DO) either to operable or to non-operable.

Summary of the Invention

This invention is based on the task of improving performance.

The technical effect of the invention is higher diagnosis efficiency, depth and reliability during diagnosing technical condition of highly complex objects.

In order to solve the stated task and achieve the indicated technical effect, the method for localizing uncontrollable multiple failures in engineering systems consists in the following. Signals are received from an diagnosed object, these signals are converted into a vector of technical condition initial estimates for the elements of the diagnosed object, taking into consideration of information on internal links of the object, estimates of the DO element technical condition are specified through a cyclical process and use of formalized models of the diagnosed object in reverse and direct time, alternately using an reverse logical model and a direct logical model as the object formalized models. During the cyclical process estimate of a technical condition vector is formed, which component variables are used for deciding on the technical condition of the object elements after the cyclical process is completed.

An additional embodiment of the method is possible, wherein it is advisable that an reverse triplex logical model and a direct triplex logical model are used as the reverse logical model and the direct logical model, respectively, variables of the said triplex models taking one of the following three values:

0 - the respective element of the diagnosed object is definitely operable,
1 - the respective element of the diagnosed object is definitely non-operable,
* - no unambiguous conclusion on operability of the respective element of the diagnosed object may be made,
component variables of the initial estimate vector for elements of the diagnosed object are assigned triplex values "operable", "non-operable", "condition not determined", respectively,
after completion of the estimate specification cyclical process the technical condition of the diagnosed object elements is decided on:

operable - if the respective component variable of technical condition vector estimate equals to "0",
non-operable - if the respective component variable of technical condition vector estimate equals to "1",
localizing of a failure in the diagnosed object is impossible, if the respective estimate vector component variable equals to "*".

In order to solve the stated task and achieve the indicated technical effect, the device for localizing uncontrollable multiple failures in engineering systems comprises an interface unit, which two inputs serve for connection to two data outputs of a diagnosed object, a measuring unit, an initial estimate forming unit, a switching unit, a formalized model made of an reverse triplex logical model and a direct triplex logical model, a result interpretation unit and a control unit, wherein the interface unit output is connected to the measuring unit input; and the measuring unit output is connected to the input of the initial estimate forming unit; the first output of the initial estimate forming unit is connected to the first input of the switching unit, and its second output is connected to the second input of the switching unit; the first output of the switching unit is connected to the input of the reverse triplex logical model, and its second output is connected to the input of the direct triplex logical model; the output of the reverse triplex logical model is connected to the third input of the switching unit, and the output of the direct triplex logical model is connected to the fourth input of the switching unit, the third output of the switching unit is connected to the input of the result interpretation unit which first output is connected to the input of the control unit, and the second output serves for displaying data on diagnosis results; the output of the control unit is connected to the controlling input of the interface unit.

A further embodiment of the device is possible, wherein it is advisable that the result interpretation unit is provided with the third output serving for connection to the controlling input of a diagnosed object.

The main essential difference of the invention from analogous solutions is alternate use of the reverse and direct logical models. The use of the reverse logical model enables to significantly reduce computational burden or expenses for hardware, and the use of the direct logical model enables to overcome ambiguity of results obtained.

New diagnosis possibilities used in the invention become available due to the adoption of triplex variables enabling to divide the elements of a diagnosed object into three categories: operable, non-operable and those in which respect it is still impossible to formulate an unambiguous statement. The use of a triplex description for the technical condition of a diagnosed object is the other essential difference of the proposed invention from analogous solutions.

A known method for localizing uncontrollable failures in engineering objects is taken as the basis, which consists in that a condition of the diagnosed object elements, as available for direct control, is first determined by processing signals from these elements. Then, on the basis of information on the condition of directly controlled parts and on internal links of the diagnosed object, a condition of the other diagnosed object elements, i.e., those that are not directly controlled is determined. The present invention uses triplex variables having the values of "operable", "non-operable", "condition not determined", instead of Boolean algebra variables, for formally describing a technical condition of the diagnosed object elements. Initial technical condition estimates are formed for the diagnosed object elements on the basis of information of operability of the directly controlled elements. Then, in order to specify these technical condition estimates for the diagnosed object elements, as have been given the "condition not determined" value, cyclical processes are used wherein the direct and the reverse triplex logical models of the diagnosed object are alternated. During these processes diagnosis results are formed and issued in the terms of the said triplex variables. Moreover, either completion of a set number of cycles, or the absence of changes in cyclically specified estimates is used as the rule of termination of the cyclical processes for specifying estimates of technical condition of the diagnosed object elements.

The above advantages of the invention as well as its peculiar features are explained in the following description of the best mode for carrying out of the invention with reference to the accompanying drawings.

Brief Description of the Drawings

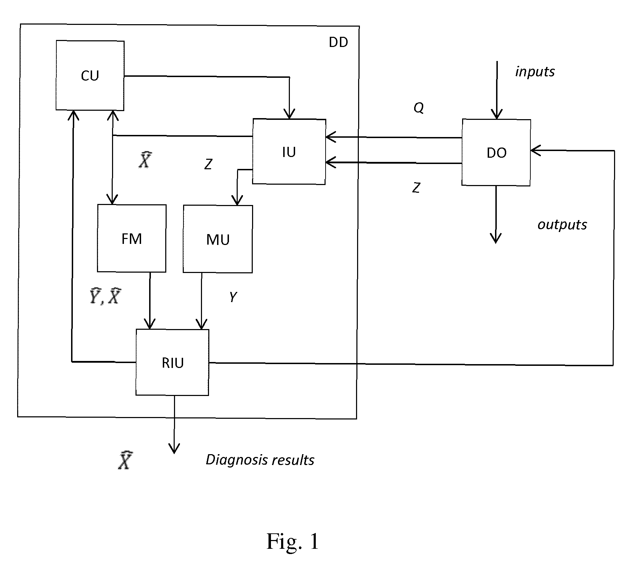

Fig. 1 shows a functional diagram of the diagnostic device (DD) according to the closest analogous solution;

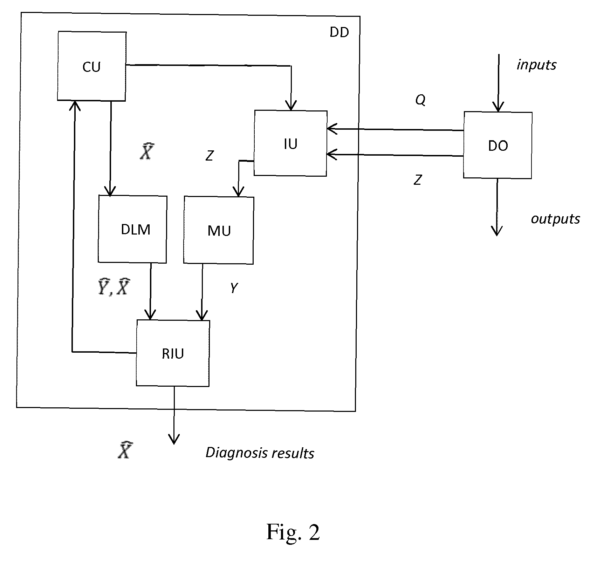

Fig. 2 - same as Fig. 1, a DD based on a direct logical model;

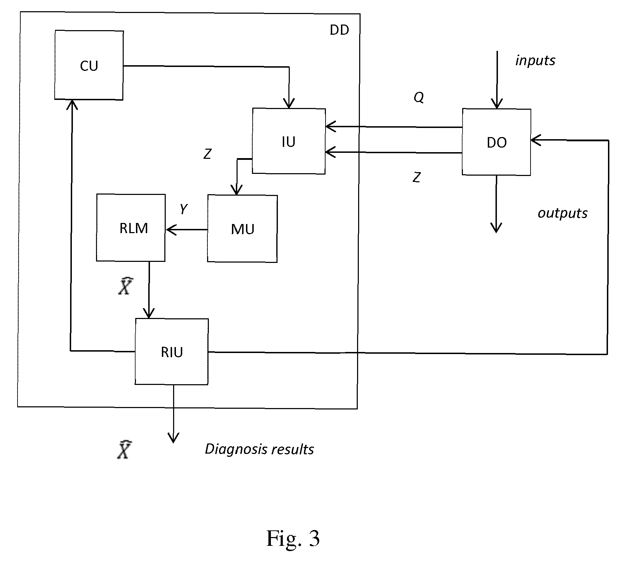

Fig. 3 - same as Fig. 1, a DD based on an reverse logical model;
Fig. 4 shows a functional diagram of the device for localizing uncontrollable multiple failures in engineering systems (DTF) according to the present invention;
Fig. 5 shows a table of direct logic arithmetic;
Fig. 6 shows a table of reverse logic arithmetic;
Fig. 7 shows a mixed directed graph.

Best Mode for Carrying Out the Invention

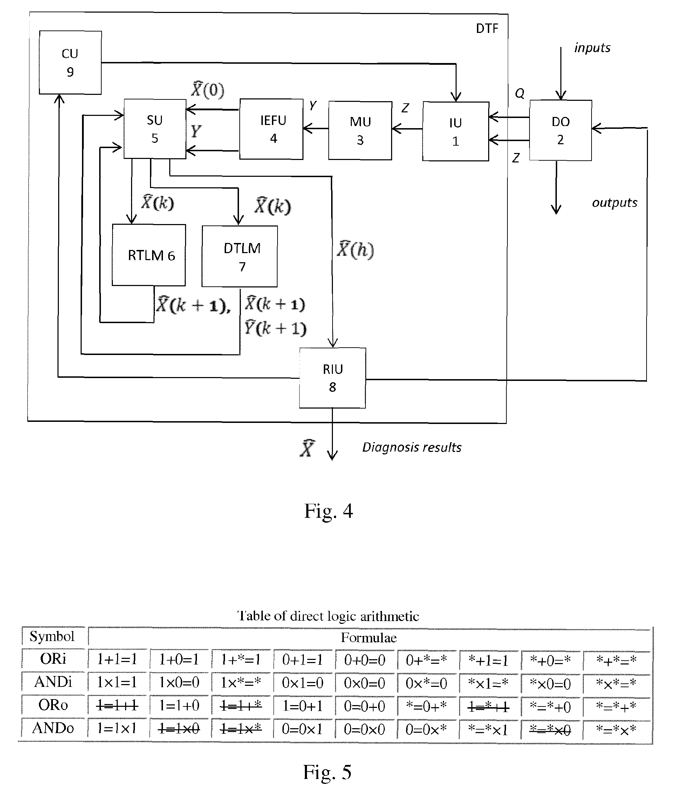

Since the method can be implemented with the use of the operating device (Fig. 4), its full description will be given in the section explaining the operation of the device.

The device (Fig. 4) for localizing uncontrollable multiple failures in engineering systems (DTF) comprises the interface unit 1 (IU), which two inputs serve for connecting to the data outputs of the diagnosed object 2 (DO). The device further comprises the measuring unit 3 (MU), the initial estimate forming unit 4 (IEFU), the switching unit 5 (SU), the formalized model formed from the reverse triplex logical model 6 (RTLM) and the direct triplex logical model 7 (DTLM), the result interpretation unit 8 (RIU), and the control unit 9 (CU). The output of the interface unit is connected to the input of the MU 3, and the output of the MU 3 is connected to the input of the initial estimate forming unit 4. The first output of the IEFU 4 is connected to the first input of the SU 5, and its second output is connected to the second input of the SU 5. The first output of the SU 5 is connected to the input of the RTLM 6, and its second output is connected to the input of the DTLM 7. The output of the RTLM 6 is connected to the third input of the switching unit 5, and the output of the DTLM 4 is connected to the fourth input of the SU 5. The third output of the SU 5 is connected to the input of the RIU 8, which first output is connected to the input of the CU 9, and the second output serves for displaying diagnosis result data. The output of the CU 9 is connected to the controlling input of the interface unit 1.

Furthermore, the RIU 8 may be provided with a third output that serves for connecting to the controlling input of the DO 2.

The device (Fig. 4) can be operated as follows.

Signals Q comprising explicit information of the functioning mode of the DO 2, and signals Z comprising implicit information on the technical condition of the elements of the DO 2 are supplied to the inputs of the DTF IU 1, being transmitted by the DO 2. The diagnosis process has cyclical nature. Each cycle starts, when the IU 1, in accordance with instructions coming from the CU 9 and signals $Q$, selectively transmits signals Z to the MU 3 that, in its turn, converts them into signals corresponding to the failure manifestationt vector $Y$ in the current cycle and transmits them to the IEFU 4. This unit 4 forms signals corresponding to an initial estimate value for the DO technical condition vector $\hat{X}$. These signals from the IEFU 4 are transmitted to the switching unit 5 that analyzes operation results of the triplex logical models RTLM 6 and DTLM 7 (for this feedback is provided for between the outputs of the RTLM and the DTLM and the third and the fourth inputs of the SU 5). Depending on an analysis result, the SU 5 connects to one of these models and feeds signals corresponding to a current estimate value $\hat{X}$ for the technical condition of the DO 2 (here, k is a number of a diagnosis cycle current tact), or supplies the RIU 8 with signals corresponding to a final estimate $\hat{X}(h)$ for the technical condition of the DO 2 (here, $h$ if a number of a diagnosis cycle last tact). The RIU 8 supplies, from its first output, signals to the CU 9 for controlling diagnosis process steps, and issues, from its second output, a diagnosis result in the form of signals corresponding to the obtained estimate $\hat{X}$ of the technical condition of the DO 2. Signals for reconfiguring the DO 2 may be supplied from the third output of the RIU 8 to the DO 2, if it is provided by the task to be fulfilled.

The theoretical fundamentals of the proposed invention are based on the theory of mixed directed graphs with two logical operators OR and AND, only uppercase letters are used for denoting the operators herein.

Each part of a diagnosed object, which is considered from the point of failure analysis as independent, is a sub-system, assembly or element and may have its own tuple of input and output logic represented by the operators "OR" and "AND".

It is to be noted that importance is attached to two oppositely directed processes in the claimed technical solution: first, it is determination of consequences or manifestations that may be caused by failures in a system, and, second, it is localizing failures, i.e., search for reasons why the system functions incorrectly. These processes are supported by the direct and reverse logic, respectively.

The process of failure influence propagation in a diagnosed object DO 2 with triplex description occurs in accordance with the rules of direct analysis logic for such a process, which rules are presented in Fig. 5. This process corresponds to failure influence propagation (incorrect functioning) from the point of origin to other parts and systems until such failures occur therein.

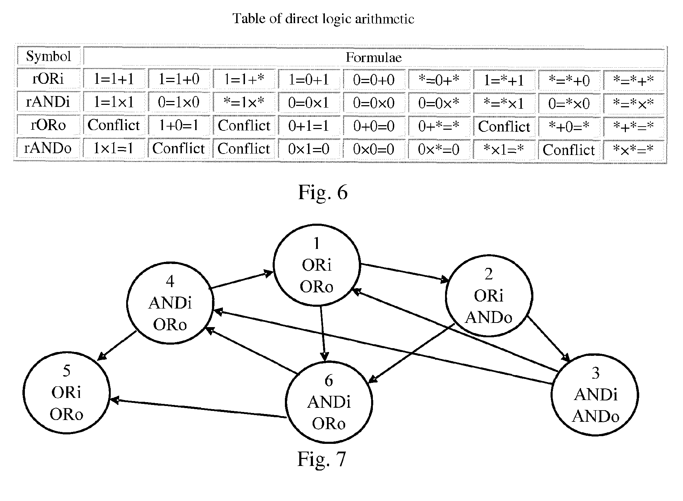

Here and after, "0" in Figs. 5 and 6 means absence of a failure, "1" means presence of a failure, its manifestation or influence, "*" means uncertain condition; lowercase letters "i" and "o" are used for denoting operators relating to inputs and outputs of the elements of the DO 2, respectively. The symbols shown in Fig. 5 have the following meanings:

ORi - operator "OR" at the element input,
ANDi - operator "AND" at the element input,
ORo - operator "OR" at the element output,
ANDo - operator "AND" at the element output.

It is to be noted that in two last lines of the Table (Fig. 5) some combinations are absent (stricken-through), i.e., corresponding formulae do not exist as such, and the provided combinations contradict to the definitions of the corresponding operators "OR" or "AND".

The backward analysis logic corresponds to what might be at the element input when its output is known. This corresponds to a direction of localizing (tracing) a failure, starting from its manifestations. The results of inversion of the formulae shown in Fig. 5 are presented in Fig. 6, where the operator obtained after inversion is additionally indicated by the letter "r".

Cells causing multiplication of variants are shown at the grey background in Fig. 6. Every time when such a situation occurs, the "failure tree" that is not explicitly calculated here is branched. Thus, for an analysis in the backward direction (a case of inversion) it may be stated that the presence of 1 at the output of the logical operator OR may be correlated with the presence of 1s at both its outputs or one 1 at any of them.

The absence of some formulae in the Table shown in Fig. 5 leads to conflict (or contradictory) situations appearing in corresponding cells of Table 6. These cells contain the word "conflict". If a conflict appears, the entire supposed branch (hypothesis) to the branching nearest as to steps should be removed as inadmissible according to the logic used.

Failure modeling

The present invention pre-supposes that for any real diagnosed object 2 a directed mixed graph of manifesting and occurring failures in this DO 2 may be formed on the basis of its analysis.

Fig. 7 shows, as an example, a methodical directed mixed graph for a hypothetical DO 2 with six vertices (that represent the elements of the diagnosed object 2). Some of the graph vertices may be elements with possible failures, some of them represent inner processes, and other represent manifestations of these failures. Thus, the input and the output are defined by the vertex sequence numbers only. For example, the vertices 1 and 3 are elements of the system, which may contain failures, and the vertices 2 and 5 are elements of the system, on which these failures are manifesting (and may be detected and fixed); accordingly, the vertices 4 and 6 are some inner elements that do not relate to either type, but ensure presentation of the logic of the processes studied. In order to implement the logical operator Oro, the rule of preferred outputs should be additionally indicated (determined prescription or random distribution).

In order to simplify solution formalizations, matrix notation is used. Let's introduce the following notations: $x_j(k)$ is a triplex value of the $j$-component of the condition (vertex) of the graph in the beginning of the regular $k$-tact ($x_j = 0$ means the absence of a failure in the $j$-element, $x_j = 1$ is the presence, influence or manifest of a failure in the $j$-element, $x_j = {}^*$ is an indefinite condition of the $j$-element), $x_j (k + 1)$ is a triplex value of the condition of the $j$-component (vertex) of the graph after the regular $k$-tact, the upper index is the symbol of a logical operator at the input of the graph vertex (e.g., $x^{ORi}$ indicates the OR operator at the element input); the lower index is the symbol of a logical operator at its output (e.g., $x_{ORo}$ indicates the operator OR at the element output). The sequence number j of each component encrypts the physical content and relation to a category: a failure, its manifestation or an inner variable. In addition, it is supposed that the link structure of the (arc) graph in Fig. 7 does not contain any uncertainties. Then the following formula is equivalent to the graph shown in Fig. 7:

$$
\begin{bmatrix}
x_{ORo}^{ORi}(k+1) \\
x_{ANDo}^{ORi}(k+1) \\
x_{ANDo}^{ANDi}(k+1) \\
x_{ORo}^{ANDi}(k+1) \\
x_{ORo}^{ORi}(k+1) \\
x_{ORo}^{ANDi}(k+1)
\end{bmatrix}
=
\begin{bmatrix}
0 & 0 & 1 & 1 & 0 & 0 \\
1 & 0 & 0 & 0 & 0 & 0 \\
0 & 1 & 0 & 0 & 0 & 0 \\
0 & 0 & 1 & 0 & 0 & 1 \\
0 & 0 & 0 & 1 & 0 & 1 \\
1 & 1 & 0 & 0 & 0 & 0
\end{bmatrix}
\begin{bmatrix}
x_{ORo}^{ORi}(k) \\
x_{ANDo}^{ORi}(k) \\
x_{ANDo}^{ANDi}(k) \\
x_{ORo}^{ANDi}(k) \\
x_{ORo}^{ORi}(k) \\
x_{ORo}^{ANDi}(k)
\end{bmatrix},
\qquad (3)
$$

where the elements of the coefficient matrix are represented by zeroes and ones only.

The symbols of logical operators at the input and the output of each vertex relate, respectively, to lines and columns of the binary coefficient matrix. On this basis, we rewrite the formula (3) as:

$$
\begin{bmatrix}
x_1(k+1) \\
x_2(k+1) \\
x_3(k+1) \\
x_4(k+1) \\
x_5(k+1) \\
x_6(k+1)
\end{bmatrix}
\begin{matrix}
\text{ORi} \\
\text{ORi} \\
\text{ANDi} \\
= \text{ANDi} \\
\text{ORi} \\
\text{ANDi}
\end{matrix}
\underbrace{
\begin{bmatrix}
0 & 0 & 1 & 1 & 0 & 0 \\
1 & 0 & 0 & 0 & 0 & 0 \\
0 & 1 & 0 & 0 & 0 & 0 \\
0 & 0 & 1 & 0 & 0 & 1 \\
0 & 0 & 0 & 1 & 0 & 1 \\
1 & 1 & 0 & 0 & 0 & 0
\end{bmatrix}
}_{\substack{\text{ORo} \; \text{ANDo} \; \text{ANDo} \; \text{ORo} \; \text{ORo} \; \text{ORo} \\ \text{DM}}}
\begin{bmatrix}
x_1(k) \\
x_2(k) \\
x_3(k) \\
x_4(k) \\
x_5(k) \\
x_6(k)
\end{bmatrix},
\qquad (4)
$$

where the binary coefficient matrix is, in general, indicated as DM.

The model of the kind (4) is a direct triplex logical model (DTLM), and the coefficient matrix is a matrix of direct dependency DM (Dependency Matrix). The principal peculiarity of this matrix, as the mixed graph (shown in Fig. 7 in this case), is that particular logical operators are assigned to the lines and columns of particular logical operators.

The rules for working with the DM are as follows. All operations of multiplying it by the vector *X* written on the right side are performed as usual, but subject to two additional conditions:

1. Depending on an operator, the output logic of each preceding graph vertex (e.g., the operator is written under the respective column in Fig. 7) is realized (see Fig. 5 for operators ANDo and ORo). All 1s of this column for the operator ANDo are equivalent and correspond to 1, and various variants are considered for the operator ORo, where one of 1s equals to 1, and the other equals to 0, and, vice versa (according to the logic provided for in the graph, for example, in Fig. 7).

2. Depending on an operator, the input logic of the respective vertex (the operator is written to the left from the respective line) is realized (see Fig. 5 for the operators ANDi and ORi). For the operator AND, 1 is obtained only in a case where both summands (obtained with due regard to values of the elements in the column *x(k)* and operators ANDo, ORo) are equal to 1, and for the operator OR - in a case where at least one summand (obtained similarly) equals to 1.

In addition to the direct dependency matrix DM, one more binary matrix is introduced that is an exit matrix EM (Exit Matrix). Multiplication of the technical condition vector *X* on the left side by this matrix enables to select from all the elements of a diagnosed object DO 2 only those elements (or, in the general case, a combination thereof) that correspond to observed failure manifestations. This matrix is realized by the measuring unit 3 (Fig. 4). For the methodical example under consideration, the exit matrix is defined by the following equalities:

$$Y(k) = \begin{bmatrix} y_1(k) \\ y_2(k) \end{bmatrix} = \text{EM} \begin{bmatrix} x_1(k) \\ x_2(k) \\ x_3(k) \\ x_4(k) \\ x_5(k) \\ x_6(k) \end{bmatrix} = \underbrace{\begin{bmatrix} 0 & 1 & 0 & 0 & 0 & 0 \\ 0 & 0 & 0 & 0 & 1 & 0 \end{bmatrix}}_{\text{EM}} \begin{bmatrix} x_1(k) \\ x_2(k) \\ x_3(k) \\ x_4(k) \\ x_5(k) \\ x_6(k) \end{bmatrix}, \qquad (5)$$

where: $y_l(k)$ is the *l*-component of the failure manifestation vector $Y$ in the *k*-tact of the diagnosis cycle, and the total number of the components is equal to *m*.

Finally, the multivariate model of influence propagating in an object of failure conditions may be described by the following equations:

$$X(k+1) = \text{DM}\, X(k) + X(0), \qquad (6)$$

$$Y(k) = \text{EM}\, X(k), \qquad (7)$$

where $X(0)$ - appearance of failures at a conditional time 0.

The equation (6) describes generalized propagation of failure influences from vertex to vertex (from element to element of the DO 2), the equation (4) describes failure manifestation (on some elements of the DO 2, which corresponds to the physical nature of the DO 2).

A particular model is adequate to the process of propagatiing failures in a real system, which is supported by formalized descriptions of systems, experts' opinions and results of scaled-down experiments. After confirming reliability, the next step is performed, namely, the step of localizing failures.

<u>Localizing (tracing) failures.</u> This technical solution *a priori* supposes that failures may be both simple (single), and complex (multiple). The only limitation, as introduced here, is that failures are not changed during one full cycle of their localizing.

The procedure of reverse transformations of the model introduced as above, see Equations (6) and (7), consists of several steps.

It is supposed that the measuring unit MU 3 correctly determines the observed failure manifest vector *Y(0)* at a time 0 corresponding to the beginning of a regular localizing cycle.

*Step 1.* Estimate *X(0)* is formed for the whole technical condition vector *X(0)* of the system (logical variables of all the vertices of the mixed graph) at a time 0 corresponding to the beginning of a regular localizing cycle. The following values are assigned to the elements of the vector $X(0)$: "0" - the respective element is definitely operable; "1" - the respective element is definitely non-operable; "*" - an uncertain element which operability may not be evaluated proceeding from the observed failure manifest.

This procedure determines the whole totality of solutions for the equation:

$$Y(0) = \text{EM} \cdot X(0), \ m < n, \qquad (8)$$

in respect of the vector $X(0)$. Here and after, *Y(0)* is the failure manifest vector having *m* components, *X(0)* is the technical condition vector for the elements of the DO 2 having *n* components, EM is the binary matrix having *m* lines and *n* columns; the dot in the middle of the line indicates a matrix multiplication operation.

In the general case, the solution for Equation (8) is determined by the formula:

$$\{X(0)\}_\mu = \widetilde{\text{EM}} \cdot Y(0) + \overline{\text{EM}}^R \cdot \mu, \qquad (9)$$

where the curly brackets indicate a plurality of indiscernible solutions, the plurality being caused by varying the vector $\mu$ with random elements. In the formula (9): $\mu$ is the vector having *n* - rankEM elements, i.e., the number of the elements is equal to the number of linearly dependent lines of the matrix EM; $\widetilde{\text{EM}}$ is the canonizer for the matrix EM, i.e., a matrix which ensures fulfillment of the identity $\widetilde{\mathrm{EM}} = \widetilde{\mathrm{EM}} \cdot \mathrm{EM} \cdot \widetilde{\mathrm{EM}};$ $\overline{\mathrm{EM}}^R$ is the right divisor of zero for the matrix EM of maximum rank, i.e., a matrix having the dimension $n \times (n\text{-rankEM})$ for which the condition $\mathrm{EM} \cdot \overline{\mathrm{EM}}^R = 0$ is fulfilled.

The canonizer $\widetilde{\mathrm{EM}}$ in the tasks under consideration (all the elements of the matrix EM are represented by 0s and 1s only, and the matrix itself has a maximum line rank) is equal to the transposed value of the source matrix: $\widetilde{\mathrm{EM}} = (\mathrm{EM})^T$. Thus, the resulting formula has the following form:

$$\{X(0)\}_\mu = (\mathrm{EM})^T Y(0) + \overline{\mathrm{EM}}^R \mu, \tag{10}$$

and all the elements of the vector $\mu$ are hereinafter represented by asterisks * (condition uncertainness).

*Step 2.* On the basis of the known matrix DM, and, in particular, its inversion rDM (reverse Dependency Matrix), the elements of the vector X marked by "*", i.e., regularly uncertain, are specified in the reverse sequence of failure influence propagation.

By transposing (mutually changing elements of lines and columns, including totalities of logical operators) and substituting inversions of the operators for the source operators (by using backward analysis logic) we obtain a recurrent relation for reversed time from Equation (4):

$$\begin{bmatrix} x_1(\tau+1) \\ x_2(\tau+1) \\ x_3(\tau+1) \\ x_4(\tau+1) \\ x_5(\tau+1) \\ x_6(\tau+1) \end{bmatrix} \begin{matrix} \mathrm{rORo} \\ \mathrm{rANDo} \\ \mathrm{rANDo} \\ = \mathrm{rORo} \\ \mathrm{rORo} \\ \mathrm{rORo} \end{matrix} \underbrace{\begin{bmatrix} 0 & 1 & 0 & 0 & 0 & 1 \\ 0 & 0 & 1 & 0 & 0 & 1 \\ 1 & 0 & 0 & 1 & 0 & 0 \\ 1 & 0 & 1 & 0 & 1 & 0 \\ 0 & 0 & 0 & 0 & 0 & 0 \\ 0 & 0 & 0 & 1 & 1 & 0 \end{bmatrix}}_{\mathrm{rDM}} \begin{bmatrix} x_1(\tau) \\ x_2(\tau) \\ x_3(\tau) \\ x_4(\tau) \\ x_5(\tau) \\ x_6(\tau) \end{bmatrix} \tag{11}$$

$$\mathrm{rORi} \quad \mathrm{rORi} \quad \mathrm{rANDi} \quad \mathrm{rANDi} \quad \mathrm{rORi} \quad \mathrm{rANDi}$$

where $\tau = 0,1,2,...$ - number of a reversed time tact (from the present time to the past).

The model of the kind (11) is a reverse triplex logical model (RTLM), and the coefficient matrix is a reverse dependency matrix rDM.

The rules of working with an rDM are similar to the above-described rules, with due regard to two circumstances:

1. Now, solution variants are caused by the operators rORi and rANDi (where there are two 1s in a column) in accordance with Fig. 6. These are alternative variants (hypotheses) of the failure propagation pre-history that are subject to further analysis. After each passing of such operator it is necessary to treble a number of analyzed variants, since the number of possible values for variables is equal to three (0, 1, *).

2. During calculation of values conflicts that relate to different lines are possible, as shown in Fig. 6. Then, corresponding hypotheses concerning the failure propagation pre-history are omitted.

In such a case, the first circumstance defines the rule of branching of a "failure tree", and the second one excludes unpromising (contradicting to the diagnosed object logic) branches.

In general, the iteration procedure of localizing failures with fulfillment of back steps may be written as the following formula:

$$\hat{X}(\tau) = \mathrm{rDM} \cdot \left( \mathrm{rDM} \left( ... \left( \mathrm{rDM}(\mathrm{EM}^T Y(0) + \overline{\mathrm{EM}}^R \mu) \right) \right) \right). \tag{12}$$

A number of cycle tacts $\tau$ is selected from the provision of either terminating deformation (change) of the condition vector $X(\tau+1) = X(\tau)$, or limiting to some value $\tau = \tau_{\max}$. A simplified structural diagram of the process (of the DTF operation, Fig. 4), realizing the iteration procedure for localizing failures is shown below.

*Step 3*. Possible points of proved failures are indicated by obtained one's values of components of estimate $\hat{X}$ of the technical condition vector. The presence of zero elements shows reliably operable elements of the DO 2. The presence of asterisks * indicates those elements of the DO 2 (modules, units, devices, sub-systems), in respect of which no explicit statement on a failure or fault may be formulated on the basis of information available. This shows incomplete control inherent to the DO 2 (an objective property of the DO 2).

Thus, technical condition of the diagnosed object 2 is completely determined by the vector *X* having Boolean elements only ("0" - element is operable, "1" - element failure). The DTF is connected to the diagnosed object 2 through the interface unit IU 1. According to a set method of control, the measuring unit MU 3 controls technical condition of certain elements of the diagnosed object *Y* at a time conditionally called the initial time here, and the MU 3 forms the failure observed manifest vector *Y(0)* for that time. On the basis of information on *Y*(0), the initial estimate forming unit IEFU 4 forms initial estimate of the condition vector $\hat{X}$(0), which estimate is triplex. Specific positions of uncertainties are determined, in accordance with the formulae (9), (10), by the structure of divisors of the exit matrix zero, i.e., *a priori* information on structural peculiarities of the DO 2.

The device works in cycles. After receiving information *X*(0) from the IEFU 4, the cycle of specifying uncertain components of the technical condition vector $\hat{X}$ estimate starts. New information from the initial estimate forming unit IEFU 4 is not received, until calculations in this cycle are completed.

After that, in order to specify the technical condition vector *X* value, one of the triplex logical models RTLM or DTLM is used by SU 5 instructions. Diagnosis results are presented through the second output of the RIU 8.

The direct model DTLM is used only in a case where a next specified element is equal to "*", i.e., remains uncertain. In such a case the use of the RTLM 6 is not productive - see Fig. 6: back transition from an output having the "*" value always leads to uncertainty of inputs, i.e., to multiplication of uncertainty in the system, the direct model DTLM 7 being used not in full, but only in its part that corresponds to a specified component, i.e., one its line. In all other cases only the RTLM 6 is used. This enables to reduce volume of calculations significantly.

The stop provision is fulfilled, if *X(k)=X(k*-1) or 2*n* and more steps are performed. Thus, a number of iterations does not exceed *2n,* where *n* is the number of diagnosed elements of the DO 2.

The technical effect, i.e., efficiency, in the claimed solution is ensured due to that, taking into account all complexity of the physical processes that really run in the DO 2, the method and the device for localizing failures work exclusively with logical variables, and the simplicity of the algebraic rules used enables to process information in significantly accelerated time. In the result, it is possible to achieve obtaining of diagnosis results nearly in real time.

The depth is ensured by the use (formal reflection) of practically all (all significant or all known) inner links of the DO 2 in the triplex logical models used, which enables to take into account, and with acceptable care, really existing mutual influences of its parts which, depending on the context, are understood as elements, modules, units, devices or sub-systems.

Reliability is ensured by a triplex description of the technical condition of the diagnosed object parts being under control. This enables, in a determined statement (i.e., without regard to action of random factors), to strictly divide all the object's parts into two groups with definite determination of their operability and one group combining the diagnosed object parts for which it is objectively impossible to definitely determine their technical condition.

The possibility of detecting multiple failures is ensured by alternating the reverse triplex logical model and the direct triplex logical model that enable to fulfill the diagnosis objective without support of the simplifying assumption on uniqueness of a failure.

In addition, explicit indication, as obtained in the result of the use of the proposed invention, to the presence and arrangement of the diagnosed object parts for which a definite judgment on their technical condition may not be formulated, gives a unique possibility for further improving the diagnosed object in terms of achieving its deeper control both by introducing additional control points for its parts, and growing a number of inner links (i.e., interconnecting) between those parts.

Industrial Applicability

The claimed method for localizing uncontrollable multiple failures in engineering systems and the device for implementing it may be most successfully applied in the industry in systems for functional diagnosis of complex engineering objects for the purpose of localizing failures in real time at the background of natural signals, as well as in processes of designing complex engineering systems in the whole and their sub-systems of functional diagnosis in particular.

**Claims**

1. A method for localizing uncontrollable multiple failures in engineering systems, consisting in that signals from a diagnosed object are received, these signals are transformed into an initial technical condition estimate vector for the diagnosed object elements taking into account information on inner links in the diagnosed object, technical condition estimates for the diagnosed object elements are specified through a cyclical process and using formalized models of the diagnosed object in reverse and direct time, while alternately using a reverse logical model and a direct logical model as said formalized models of the diagnosed object, an estimate of the technical condition vector is formed during the cyclical process, and estimate variable components are used for deciding on technical condition of the diagnosed object elements after the cyclical process is completed.

2. The method according to Claim 1, **characterized in that** a reverse triplex logical model and a direct triplex logical model are used as the reverse logical model and the direct logical model, respectively, which variables take one of the three values:

   0 - a respective element of the diagnosed object is definitely operable,
   1 - a respective element of the diagnosed object is definitely non-operable,
   * - no definite conclusion may be made on operability of a respective element of the diagnosed object,
   accordingly, triplex values "operable", "non-operable", "condition not determined" are assigned to variable components of the initial technical condition estimate vector for the diagnosed object elements,
   technical condition of the diagnosed object elements is decided on after the estimate specification cyclical process is completed:

   operable, if the respective variable component of the technical condition estimate vector is equal to "0",
   non-operable, if the respective variable component of the technical condition estimate vector is equal to "1",
   no failure localizing of a diagnosed object is possible, if a respective variable component of the estimate vector is equal to "*".

3. A device for localizing uncontrollable multiple failures in engineering systems, comprising an interface unit which two inputs serve for connection to two data outputs of a diagnosed object, respectively, a measuring unit, an initial estimate forming unit, a switching unit, a formalized model made of a reverse triplex logical model and a direct triplex logical model, a result interpretation unit, and a control unit, wherein the output of the interface unit is connected to the input of the measuring unit, and the output of the interface unit is connected to the input of the initial estimate forming unit, the first output of the initial estimate forming unit is connected to the first input of the switching unit, and its second output is connected to the second input of the switching unit, the first output of the switching unit is connected to the input of the reverse triplex logical model, and its second output is connected to the input of the direct triplex logical model, the output of the reverse triplex logical model is connected to the third input of the switching unit, and the output of the direct triplex logical unit is connected to the fourth input of the switching unit, the third output of the switching unit is connected to the input of the result interpretation unit which first output is connected to the input of the control unit, and the second output serves for displaying data on diagnosis results, the output of the control unit is connected to the controlling input of the interface unit.

4. The device according to Claim 3, **characterized in that** the result interpretation unit is provided with the third output that serves for connecting to the controlling input of a diagnosed object.

Fig. 1

Fig. 2

Fig. 3

EP 2 921 917 A1

Fig. 4

Table of direct logic arithmetic

| Symbol | Formulae | | | | | | | | |
|---|---|---|---|---|---|---|---|---|---|
| ORi | 1+1=1 | 1+0=1 | 1+*=1 | 0+1=1 | 0+0=0 | 0+*=* | *+1=1 | *+0=* | *+*=* |
| ANDi | 1×1=1 | 1×0=0 | 1×*=* | 0×1=0 | 0×0=0 | 0×*=0 | *×1=* | *×0=0 | *×*=* |
| ORo | ~~1=1+1~~ | 1=1+0 | ~~1=1+*~~ | 1=0+1 | 0=0+0 | *=0+* | ~~1=*+1~~ | *=*+0 | *=*+* |
| ANDo | 1=1×1 | ~~1=1×0~~ | ~~1=1×*~~ | 0=0×1 | 0=0×0 | 0=0×* | *=*×1 | ~~*=*×0~~ | *=*×* |

Fig. 5

15

Table of direct logic arithmetic

| Symbol | Formulae | | | | | | | | |
|---|---|---|---|---|---|---|---|---|---|
| rORi | 1=1+1 | 1=1+0 | 1=1+* | 1=0+1 | 0=0+0 | *=0+* | 1=*+1 | *=*+0 | *=*+* |
| rANDi | 1=1×1 | 0=1×0 | *=1×* | 0=0×1 | 0=0×0 | 0=0×* | *=*×1 | 0=*×0 | *=*×* |
| rORo | Conflict | 1+0=1 | Conflict | 0+1=1 | 0+0=0 | 0+*=* | Conflict | *+0=* | *+*=* |
| rANDo | 1×1=1 | Conflict | Conflict | 0×1=0 | 0×0=0 | 0×*=0 | *×1=* | Conflict | *×*=* |

Fig. 6

Fig. 7

## INTERNATIONAL SEARCH REPORT

| | International application No. |
|---|---|
| | **PCT/RU 2012/000958** |

| A. CLASSIFICATION OF SUBJECT MATTER | *G05B 17/00 (2006.01)* |
|---|---|
| | *G06F 11/00 (2006.01)* |

According to International Patent Classification (IPC) or to both national classification and IPC

**B. FIELDS SEARCHED**

Minimum documentation searched (classification system followed by classification symbols)

G06F 11/00, G01R 31/00-31/28, G05B 23/00-23/02, 17/00-17/02

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet

**C. DOCUMENTS CONSIDERED TO BE RELEVANT**

| Category* | Citation of document, with indication, where appropriate, of the relevant passages | Relevant to claim No. |
|---|---|---|
| X | US 2006/0041814 A1 (JANUSZ RAJSKI et al) 23.02.2006, abstract, [0008]-[0017], [0044]-[0048], [0053], [0065]-[0076], [0080], [0157]-[0163], [0167], [0170]-[0171], the claims | 1-4 |
| A | US 2006/0041812 AI (JANUSZ RAJSKI et al) 23.02.2006 | 1-4 |
| A | RU 2430406 C2 (OBSHCHESTVO S OGRANICHENNOI OTVETSTVENNOSTIU "NAUCHNO-PROIZVODSTVENNOE PREDPRIYATIE "ADVENT") 27.09.2011 | 1-4 |
| A | RU 2265236 C1 (ZAO MOSKOVSKOE KONSTRUKTORSKOE BIURO "PARALLEL") 27.11.2005 | 1-4 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 August 2013 (19.08.2013) | 22 August 2013 (22.08.2013) |

| Name and mailing address of the ISA/ RU | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Measurements, Control, Diagnostics. Machine-Building. Encyclopedia. 1996, vol. III-7, 404
- Fundamentals of Technical Diagnostics. Book 1. Models of Objects, Diagnostic Methods and Algorithms. Energia. 1976, 13
- Measurements, Control, Diagnostics (in Russian). Machine-Building. Encyclopedia. 1996, vol. III-7
- Fundamentals of Technical Diagnostics. Book 1. Models of Objects, Diagnostic Methods and Algorithms (in Russian). Energia. 1976
- **L.P. KOLODEZHNY ; A.V. CHERNODAROV.** Reliability and Engineering Diagnostics: Textbook for students of air-force higher education institutions. M.: Publishing House, 2010
- Fundamentals of Technical Diagnostics. Book 1. Models of Objects, Diagnostic Methods and Algorithms. Energia. 1976, 38